(19) Europäisches Patentamt
European Patent Office
Office européen des brevets

(11) Publication number: **0 120 610**
**A1**

(12) # EUROPEAN PATENT APPLICATION

(21) Application number: 84301235.2

(22) Date of filing: 27.02.84

(51) Int. Cl.³: A 01 N 25/12
A 01 N 25/10, A 01 N 43/90

(30) Priority: 28.02.83 US 470423

(43) Date of publication of application:
03.10.84 Bulletin 84/40

(84) Designated Contracting States:
BE CH DE FR GB IT LI LU NL SE

(71) Applicant: ELI LILLY AND COMPANY
307, East McCarty Street
Indianapolis Indiana 46285(US)

(72) Inventor: Wertenberger, Donald Perry
R. R. 1 Box BC 12
New Palestine Indiana 46163(US)

(72) Inventor: Nevin, Robert Stephen
7319 Wood Stream Drive
Indianapolis Indiana 46254(US)

(72) Inventor: Tarwater, Oliver Reed
331 Hickory Drive, R. 7
Greenfield Indiana 46140(US)

(74) Representative: Crowther, Terence Roger et al,
Erl Wood Manor
Windlesham Surrey GU20 6PH(GB)

(54) **Controlled release formulation.**

(57) A controlled release formulation comprising tricyclazole and an acrylic polymer is useful for the control of plant-pathogenic organisms.

EP 0 120 610 A1

# CONTROLLED RELEASE FORMULATION

This invention relates to an improved fungicidal formulation.

The control of rice blast disease is of great economic benefit in those countries capable of sustaining a rice crop. Tricyclazole, 5-methyl-1,2,4-triazolo(3,4-b)benzothiazole, is a systemic fungicide for the control of Piricularia oryzae, the causative organism of rice blast. This compound is disclosed in U.S. Patent Specification No. 4,064,261.

The present invention provides a controlled release formulation comprising tricyclazole. This formulation may be applied to the locus of the rice plants and thereby release the active ingredient over an extended period of time. The present formulation has advantages over prior formulations already known in the art. Current commercial tricyclazole formulations, such as aqueous suspensions, granules and wettable powders, when applied to the soil quickly release the active ingredient upon application and therefore do not provide the length of disease protection necessary to protect the rice plants through the leaf blast stage. Further, current formulations, by instantly releasing such a high concentration of active ingredient, can be injurious to young rice plants. The present controlled release formulation overcomes both of these disadvantages by releasing tricyclazole over a long period of time without the initial high concentration of active agent. Therefore, one advantage of the present formulation over existing formulations of tricyclazole

is the ability to reduce phytotoxicity for young seedlings of rice.

Additionally, the present controlled release formulation requires fewer applications of the active over the length of the leaf blast stage of the growing season, thereby allowing the rice farmer to realize a substantial savings of both time and money.

According to the present invention there is provided a controlled-release formulation comprising tricyclazole and a polymer having a glass transition temperature of from about -20°C to 100°C and containing repeating units derived from at least one acrylic monomer of the formula (I):

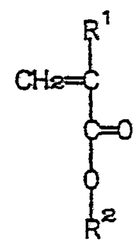

(I)

wherein:

$R^1$ is hydrogen or $C_1$-$C_4$ alkyl; and

$R^2$ is $C_1$-$C_{10}$ alkyl; said repeating units constituting from about 30% to 100% by weight of the polymer.

In the above formula the term $C_1$-$C_{10}$ alkyl represents a straight or branched alkyl chain having from one to ten carbon atoms. Typical $C_1$-$C_{10}$ alkyl

groups include methyl, ethyl, n-propyl, isopropyl, t-butyl, isopentyl, n-hexyl, n-heptyl, 2-ethylhexyl, isononyl, n-decyl and the like.

Preferred monomers have the above formula wherein $R^1$ is hydrogen or methyl and $R^2$ is $C_1$-$C_5$ alkyl, especially methyl or ethyl.

The term "polymer", as used herein, refers to both homo and copolymers. However, it is crucial for success of the invention, that the polymer, be it homo or copolymer, contain repeating units derived from the acrylic monomer(s) of formula (I) in an amount of from about 30 to 100% by weight of the polymers.

The acrylic polymer(s) will typically have an average molecular weight of about 500 to 3,000,000, more preferably from about 5000 to 1,000,000. The polymer may be linear, cross-linked or metal ion cross-linkable. The preparation of these polymers will be readily apparent to those skilled in the art of polymer chemistry.

The polymers employed in the present formulation, in addition to containing from about 30% to 100% by weight of the above defined acrylic repeating units, may also contain repeating units derived from a non-acrylic monomer. It will be readily apparent to those skilled in the art that the use of non-acrylic monomers may be appropriate when a more economical polymer is desired, or when the availability of the acrylic polymers is limited. Examples of such non-acrylic monomers which may be used in the polymer include, but are not limited to, styrene, α-methyl-

styrene, acrylonitrile, vinyl acetate, vinyl chloride and the like. Repeating units derived from such other monomers can be present in the polymer at a concentration of up to about 70% by weight of the polymer employed in the formulation of the invention.

In addition to having the above noted properties, the polymer employed in the present formulation will have a glass transition temperature (Tg) in the range of from about -20°C to about 100°C, more preferably from about -15°C to 60°C. Therefore the amount of non-acrylic monomer permissible in the final polymer is limited by the resulting glass transition temperature of the final mixture of monomers as long as the non-acrylic monomer is not present at a concentration greater than 70% by weight.

All glass transition values were determined on a DuPont® 990 Thermal Analyzer using glass beads as the reference. The thermocouple was painted with the emulsion, air-dried for 24 hours, and dried *in vacuo* at 25°C. for 48 hours. The system was then cooled to -80°C with liquid nitrogen, heated at a rate of 10°C per minute and the glass transition was taken at the first departure from the base line.

A preferred aspect of the polymer employed in the controlled release formulation of the invention is that it contains a small amount, for example, up to about 4% by weight, of repeating units derived from an acrylic or methacrylic acid. Typically, the addition of one or more of these acids during polymerization promotes the emulsion polymerization process and

thereby yields polymers which form films with improved properties.

Several commercially available acrylic copolymers fall within the description of polymers provided herein which can be employed in the present formulation. Preferred among these commercially available acrylic copolymers is Rhoplex AC-33 (Rohm and Haas Company). This acrylic resin emulsion has the following properties:

| | |
|---|---|
| Appearance | White milky liquid |
| Solids content, % | 46 to 47 |
| pH | 9.4 to 9.9 |
| Weight per gallon, lbs. | 8.9 |
| Minimum film-formation temperature | 9°C. |
| Tg (Glass transition temperature) | -9°C. |

The copolymer contains ethyl acrylate/methyl methacrylate at a ratio of about 2.8/1 (w/w) and approximately 2-3% of acrylic or methacrylic acid. The resin emulsion contains about 5% of an alkyl aryl polyethylene oxide surfactant.

The molecular weight of the copolymer is 780,000 ± 10% as determined by solution viscosity.

Another acrylic copolymer suitable for use in the present controlled release formulation is sold under the trademark Rhoplex B-85 and is also manufactured by Rohm and Haas Co. Typical physical properties of Rhoplex B-85 are as follows:

| | |
|---|---|
| Appearance | White milky liquid |
| Solids, % | 38.0 ± 0.5 |
| pH (as shipped) | 9.5 to 10.0 |
| Weight per gallon, lbs. | 8.9 |
| Dry bulking value (gal/lb.) | 0.102 (calculated) |
| Tukon hardness (KHN) | 18 |
| Colloidal charge | Anionic |
| Minimum film-formation temperature | >90°C. |
| Tg | 91°C. |

The copolymer was shown to contain greater than 90% of methyl methacrylate by weight.

Rhoplex B-60A is yet another acrylic emulsion copolymer manufactured by Rohm and Haas Company which can be used to prepare slow release compositions of the invention. Typical properties of Rhoplex B-60A are as follows:

| | |
|---|---|
| Appearance | White milky liquid |
| Solids, % | 46 to 47 |
| pH (when packed) | 9.4 to 9.9 |
| Weight per gallon, lbs. | 8.9 |
| Minimum film-formation temperature | 9°C. |
| Tg | -10°C. |

The copolymer contained methyl methacrylate/ethyl acrylate at a ratio of about 2.2/1 (w/w). The resin emulsion also contained an alkyl aryl polyether alcohol.

Acrylocoat is a water dispersible emulsion containing an acrylic copolymer manufactured by Rohm and Haas Company. Certain properties of Acrylocoat are as follows:

| | |
|---|---|
| Appearance | Opaque, milky liquid |
| Solids Content, % | 44 by weight |
| Flash Point | non-flammable |
| pH | 8.5 |
| Viscosity, cps | 340 |
| Specific Gravity | 1.05 |
| Weight per gallon, lbs. | 8.8 |

The tricyclazole and polymer are preferably formulated with a suitable agriculturally-acceptable carrier. The carriers can be adsorptive or absorptive in nature. Typical carriers include limestone, sand, gypsum, ground volcanic rock, clays such as the montmorillonite, attapulgite, kaolin, and ball clays, talc, fertilizer and ground agricultural products such as soybean mill run, corncob grits, rice hulls and the like. Of these, attapulgite clay and ground rice hulls are preferred. Where the granules are prepared by extrusion, ball clays are preferred. Carriers are chosen with regard to their availability and cost.

The exact concentrations of tricyclazole and polymer in the present formulations are not critical, so long as the polymer is present in a concentration which is effective to control and delay the release of the tricyclazole into a surrounding locus. Typically, the higher the concentration of polymer in the formulation, the slower the release rate of tricyclazole into the surrounding medium. Desirable concentrations will also depend upon whether the formulation contains only tricyclazole and polymer, or agriculturally-acceptable carrier as well. In general, formulations of tricyclazole and polymer, without carrier, will desirably contain from about 0.1 to about 75 percent by weight of tricyclazole (these and subsequent figures are on a dry weight basis) and from about 25 to about 99.5 percent by weight of polymer. Preferred ranges are from about 1 to about 50 percent by weight of tricyclazole and from about 50 to about 99 percent by weight of the polymer.

In general, three-or-more-component formulations will desirably contain from about 0.1 to about 30 percent by weight of tricyclazole, from about 10 to about 60 percent of polymer and from about 20 to about 89.9 percent by weight of agriculturally-acceptable carrier. Such formulations will preferably contain from about 1 to about 20 percent by weight of tricyclazole, from about 20 to about 60 percent by weight of polymer, and from about 20 to about 79 percent by weight of carrier.

The novel controlled release granules of the present invention are preferably prepared in the following manner. The active agent, preferably in finely divided form, is slurried in an aqueous emulsion of a polymer of the above description. Preferably, the finely divided particles of active agent are obtained by milling the technical material by any of several

well known techniques, such as milling in a fluid energy mill. In Examples 1-20, below, the particle size of the tricyclazole was such that 99.9 percent passed through a 325 mesh screen. The mixture of active agent and polymeric emulsion may then be combined with a suitable agriculturally-acceptable carrier and mixed to uniformity. The resulting formulation must be dried, typically at an elevated temperature, to provide dry controlled release granules suitable for application to the locus for which plant disease control is desired.

The aqueous dispersion of polymer and tricyclazole is preferably added to the carrier in a state of agitation, which is readily practiced by known methods and apparatuses. However, the carrier can be added to the tricyclazole/polymer mixture as well. Suitable types of mixers capable of providing such agitation include a coating pan mixer, cement mixer, Hobart mixer, mini-tumbler mixer, ribbon blender or any similar rotary type device. The mixing is typically carried out at ambient temperatures.

Once the polymer, tricyclazole and carrier, if present, are admixed thoroughly to uniformity, the admixture is preferably dried at an elevated temperature in order to promote coalescence of the polymer and thereby form a continuous polymer film. This temperature differs depending on the minimum film-forming temperature of the polymer employed. The temperature will typically be in the range of from about 5°C. to 180°C., more preferably in the range from

30°C. to 125°C. The type of drying apparatus is not critical, but may be chosen from any one of several devices well known to those in the art. Typical driers include rotary type driers, and ovens operated at either standard or reduced pressure. Depending on the polymer, the formulation may also be dried under ambient conditions.

Alternatively, the polymer, tricyclazole and an appropriate carrier can be admixed thoroughly to uniformity, as described above, and then extruded and subsequently dried to form pellets or granules. Techniques and equipment for extrusion are well known. It is important that a clay suited to extrusion be used as the carrier for this embodiment of the invention. Ball type clays are generally preferred. However, the exact identity of the clay is not critical and will vary with local availability.

It is desirable to use a suitable surface active agent to aid dispersion of the formulated granule in water when a carrier is employed in the formulation which is not readily disseminated throughout the aqueous medium. The choice of surface active agent, and amount thereof employed, is dictated by the nature of the composition ingredients and by the ability of the agent to facilitate the dispersing of the composition in water. For example, when using rice hulls as the carrier, a surface active agent is required to facilitate dispersion of the composition in water. Suitable surface active agents are dry and may be nonionic, anionic or cationic. Examples of anionic

surface active agents include alkyl or aryl sodium sulphonates or sulfonic acids, calcium alkylaryl sulphonates and alkyl alcohol esters of phosphoric acid. The nonionics include ethoxylated alkyl phenols, ethers and alcohols, sorbitan esters and ethoxylated sorbitan esters and ethers. Emulsifiers and adjuvants belong to the group of surface active agents. The most commercially important emulsifiers are primarily anionic and nonionic agents. The surface active agent is generally present in the formulation at a concentration of from about 0.01 to 5 percent on a dry weight basis.

It is believed that the present formulation functions by diffusion of the active ingredient through the polymer matrix into the surrounding aqueous medium. However, the precise mechanism by which the controlled release formulation of the present invention functions is not yet known, and the present formulation is not limited by any mode of operation.

Preferred slow release compositions of the present invention contain the following percentages and ingredients by dry weight. The values in the parentheses represent the percentage of ingredients necessary when a higher concentration of the active agent is employed in the formulation.

Formulation 1

4(8) Tricyclazole
46 Rhoplex AC-33
50(46) Ground Rice Hulls

Formulation 2

4(8) Tricyclazole
46 Rhoplex AC-33
50(46) Attapulgite clay

Formulation 3

4(8) Tricyclazole
20 Rhoplex AC-33
76(72) Ground Rice Hulls

Formulation 4

4(8) Tricyclazole
30 Rhoplex AC-33
66(62) Ground Rice Hulls

The formulated granules are applied to the locus of the plants in the manners conventional in agricultural chemistry. The controlled release formulation may be applied by sophisticated mechanical equipment or simply by spreading the formulation by hand. With regard to mechanical equipment, metering applicators are available which can apply accurately measured quantities of granular compositions to the soil surface. The operator of the application equipment need only take care to adjust the equipment to apply an amount of the granular formulation per unit area which supplies the desired application rate of the compound, and to apply the amount uniformly to the locus of the plants to be treated.

The present granules are preferably applied to the soil of a standard transplant flat containing

rice plants but may also be applied to a flooded rice paddy. To assure optimal disease control when applying the present controlled release formulation to the soil of a transplant flat containing rice seedlings, it is important that the rice be transplanted with a mechanical transplanter. If mechanical transplanting is not possible, transplanting should be done in such a manner that all soil adhering to the roots is transplanted to the field with the rice seedlings. Tricyclazole in the soil adhering to the roots of transplants enters the rice plant to provide continuing blast control throughout the vegetative stage of growth.

The following detailed Examples are provided in an effort to more fully illustrate specific aspects of this invention. The Examples are not intended to be limiting in any respect and should not be so construed.

Example 1

Forty-Six grams of 30/60 mesh Florex (attapulgite clay granules supplied by the Floridin Company) were added to a mixture of 8 g. of air milled tricyclazole and 100 g. of Rhoplex AC-33 under agitation. The mixture was admixed until the polymer/active agent dispersion was uniformly dispersed on the carrier, i.e. for about 10 minutes. The mixture was allowed to dry for approximately 2 hours at room temperature and ambient pressure, followed by drying in a vacuum oven at 37°C. for an additional 2 hours. The resulting controlled release granules contained tricyclazole, as

determined by assay, at a concentration of 7.61% on a dry weight basis.

Example 2

A mixture of 12 g. of air milled tricyclazole and 300 g. of Rhoplex AC-33 was added to 150 g. of 30/60 mesh Florex clay granules according to the procedure of Example 1. The mixture was dried in a vacuum oven at 50°C. for approximately 3 hours to afford controlled release granules containing tricyclazole, as determined by assay, at a concentration of 3.9% on a dry weight basis.

Example 3

A mini-tumbler mixer was charged with 96 g. of 20/60 mesh limestone granules (Calcium Carbonate Company). A mixture of 50 g. of Rhoplex AC-33 and 10 grams of air milled tricyclazole was added with an eye dropper to the limestone under agitation. The admixture was dried with a heat gun as the mixing continued, and the material was heated in a vacuum oven at about 37°C. for 2 hours. The controlled release granules as prepared by this procedure contained tricyclazole, as determined by assay, at a concentration of 6.6% by weight.

Example 4

A mixture of 6 g. of air milled tricyclazole and 69 g. of Rhoplex AC-33 was pipetted onto 109.5 g. of 20/60 mesh limestone under agitation according to the method of Example 3 to provide controlled release

granules containing tricyclazole, as determined by assay, at a concentration of 4.11% on a dry weight basis.

Example 5

Sixty grams of air milled tricyclazole and 1.50 kg. Rhoplex AC-33 were uniformly admixed using a high speed stirrer. This mixture was added to a bowl containing 750 g. of ground rice hulls under agitation in a Hobart mixer. The granules were allowed to dry at room temperature for about 60 hours. This material was put into the oven for approximately 16 hours at about 49°C. This material was then sieved using an oscillating granulator with an 8 mesh screen. The sieved granules were mixed with 0.1% Triton X-120 (a blended emulsifier from Rohm and Haas Company.) The resulting controlled release formulation contained tricyclazole, as determined by assay, at a concentration of 3.40% on a dry weight basis.

Example 6

Rhoplex B-60A and tricyclazole were mixed to uniformity and poured onto Teflon sheeting (tetrafluoroethylene fluorocarbon polymer from E.I duPont de Nemours & Co.). The mixture was oven dried and the resulting sheet of formulated tricyclazole was cut to approximately 4 to 6 mesh size particles. The controlled release formulation contained tricyclazole on a dry weight basis at a concentration of 13.6% as determined by assay.

Example 7

Rhoplex B-85 and tricyclazole were formulated as described above in Example 6 to provide a controlled release formulation containing tricyclazole, as determined by assay, at a concentration of 6.2% on a dry weight basis.

Example 8

Rhoplex AC-33 and tricyclazole were formulated as described above in Example 6 to provide a controlled release formulation containing tricyclazole, as determined by assay, at a concentration of 13.9% on a dry weight basis.

Example 9

Acrylocoat and tricyclazole were formulated as described above in Example 6 to provide a controlled release formulation containing the active agent, as determined by assay, at a concentration of 14.0% on a dry weight basis.

Examples 10-12

Forty grams of 99.1% pure technical air milled tricyclazole and 109 g. of Rhoplex AC-33 (10% by weight) were uniformly admixed with a rotary mixer. This mixture was added to 410 g. of stirred ground rice hulls and blended to uniformity. Granules representing Example 10 were dried at 40°C. for 24 hours (assay 7.56% tricyclazole by weight), while those representing Example 11 were dried at that temperature for 48 hours

(7.70% tricyclazole by weight). The formulation of Example 12 were dried at 50°C. for 24 hours (7.92% tricyclazole by weight). One-tenth of one percent of Triton X-120 by weight was added to the granules following drying.

Examples 13-15

Forty grams of 99.1% pure technical air milled tricyclazole, 217 g. of Rhoplex AC-33 (20% by weight) and 360 g. of ground rice hulls were mixed as above. The resulting granules were dried as follows: Example 13 (7.59% tricyclazole by weight) represents granules dried at 40°C. for 24 hours; Example 14 (7.71% tricyclazole by weight) represents granules dried at 40°C. for 48 hours; and Example 15 (7.51% tricyclazole by weight) represents granules dried at 50°C. for 24 hours. Again, 0.1% of Triton X-120 was added to the granules following drying.

Examples 16-18

Forty grams of 99.1% pure technical air milled tricyclazole, 326 g. of Rhoplex AC-33 (30% by weight) and 310 g. of ground rice hulls were mixed as above. The granules of Example 16 were dried at 40°C. for 24 hours (6.65% tricyclazole by weight). The formulation represented by Example 17 was dried at 40°C. for 48 hours (6.74% tricyclazole by weight). The granules of Example 18 were dried for 24 hours at 50°C. (7.12% tricyclazole by weight). Again, 0.1% of Triton X-120 was added to the formulation following drying.

The activity of representative compositions of the present invention is illustrated by the following experiments.

Example 19

One hundred and sixty g. of air milled tricyclazole and 435 grams of Rhoplex AC-33 (46% by weight) were mixed together for five minutes and then added to 1640 grams of Foundry Hill Cream clay (a ball clay from Spinks Clay Co., Paris, Tennessee) which was being blended in a mixer. After ten minutes, the mixture was extruded through a laboratory pellet mill, using a 1/2 inch thick die, to make pellets approximately 1/8 inch in diameter and varying in length from 1/8 inch to 1/4 inch. The resulting pellets were screened on an 8 mesh screen and then dried in an oven at 40°C. for 24 hours. Assay of the resulting formulation showed a tricyclazole concentration of 8.05% on a dry weight basis.

Example 20

Forty grams of 99.1% pure technical air milled tricyclazole, 326 g. of Rhoplex AC-33 (46% by weight) and 304 grams of ground rice hulls were mixed as in prior examples. The granules were dried at 40°C. for 40 hours (8.20% tricyclazole by weight). After drying, 0.5 g. of Triton AG 120 (a blended emulsifier from Rohm and Haas Company), and 5.0 g. of Cab-O-Sil M5 (a finely divided silica) were added.

## Experiment 1

One-third sections of a 28 x 58 x 3 cm. flat containing 18 day old rice plants were surface applied with slow-release granules of tricyclazole. The granules contained the active ingredient at concentrations of either approximately 4% and 8%. Treatments were made at 1.5, 3.0 and 6.0 grams of active ingredient for each flat as a whole. Twenty-four hours after treatment the sections were transplanted into flooded, one-quart 4 inch diameter plastic pots without drainage holes filled with non-sterile soil. Injury ratings were made 14 and 23 days after transplanting from the flats to the flooded containers. Twenty-three days after transplanting the plants were inoculated with a rice blast (Piricularia oryzae) spore suspension and incubated in a moist chamber at 70°F. (21°C.) for 48 hours. Seven days after inoculation the percent of rice blast disease incidence on the rice plants was recorded. Formulated slow-release granules not containing tricyclazole (blank granules) and water controls were run as well. Tricyclazole formulated as a 75WP (wettable powder containing 75% of the active agent by weight) was also tested for comparison. Crop injury rating, as compared to untreated controls, was made from 0-10 according to the following scale:

0 = no injury
1-3 = slight injury
4-6 = moderate injury
7-9 = severe injury
10 = death to the plant.

The results of this test appear below in Table I for Examples 1-4 as the average of three replications (except as otherwise indicated). Table II presents the data for Examples 10-18 compiled from another experiment. The procedure used was the same as that described above with the exception that the active agent is present in the composition at a concentration of about 8% and injury ratings were made 12 and 20 days after transplanting.

Table I

| Example No. of Formulation Tested | Rate Grams of Tricyclazole/Flat | Crop Injury Rating Days After Transplanting 14 | 23 | Percent Disease Incidence |
|---|---|---|---|---|
| 1 | 6.0 | 6.0 | 5.2 | 0 |
| | 3.0 | 4.0 | 1.2 | 0.007 |
| | 1.5 | 2.0 | 0.3 | 1.3 |
| 2 | 6.0 | 4.7 | 2.3 | 0.003 |
| | 3.0 | 3.7 | 1.3 | 0.17 |
| | 1.5 | 2.3 | 0.3 | 2.3 |
| 3 | 6.0 | 3.3 | 3.0 | 0 |
| | 3.0 | 2.3 | 0.5 | 2.3 |
| | 1.5 | 1.2* | 0.2* | 5.7 |
| 4 | 6.0 | 4.7 | 2.5* | 0 |
| | 3.0 | 3.3 | 0.7 | 0 |
| | 1.5 | 2.3 | 0 | 1.8 |
| Florex Blank | 0 | 0 | 0 | 56.7 |
| | 0 | 0 | 0 | 58.3 |
| Limestone Blank | 0 | 0 | 0 | 55.0 |
| | 0 | 0 | 0 | 56.7 |
| Tricyclazole as 75WP | 6.0 | 7.3 | 7.7 | 0* |
| | 3.0 | 6.0* | 6.0* | 0.005* |
| | 1.5 | 3.3 | 3.0 | 5.3 |
| Water | | 0 | 0 | 56.7 |

Data marked with an asterisk (*) are the average of two replications.

**Table II**

| Example No. of Formulation Tested | Rate Grams of Tricyclazole/Flat | Crop Injury Rating Days After Transplanting 12 | 20 | Percent Disease Incidence |
|---|---|---|---|---|
| 10 | 6.0 | 5.7 | 5.3 | 0 |
| | 3.0 | 4.7 | 4.0 | 0 |
| | 1.5 | 2.0 | 2.3 | 0 |
| 11 | 6.0 | 5.7 | 6.7 | 0 |
| | 3.0 | 4.0 | 3.0 | 0.4 |
| | 1.5 | 2.0 | 3.7 | 0.3 |
| 12 | 6.0 | 4.3 | 3.7 | 0 |
| | 3.0 | 3.5 | 3.7 | 0 |
| | 1.5 | 2.7 | 2.0 | 0 |
| 13 | 6.0 | 6.0 | 5.0 | 0 |
| | 3.0 | 2.7 | 1.7 | 0 |
| | 1.5 | 1.7 | 1.0 | 0.2 |
| 14 | 6.0 | 5.7 | 5.3 | 0.2 |
| | 3.0 | 3.7 | 2.7 | 0 |
| | 1.5 | 2.0 | 1.2 | 0.1 |
| 15 | 6.0 | 5.0 | 3.5 | 0 |
| | 3.0 | 4.0 | 2.7 | 0 |
| | 1.5 | 2.0 | 0.8 | 0.2 |

Table II (continued)

| Example No. of Formulation Tested | Rate Grams of Tricyclazole/Flat | Crop Injury Rating Days After Transplanting 12 | 20 | Percent Disease Incidence |
|---|---|---|---|---|
| 16 | 6.0 | 6.0 | 6.7 | 0 |
| | 3.0 | 4.7 | 3.7 | 0 |
| | 1.5 | 3.3 | 3.2 | 0 |
| 17 | 6.0 | 4.5 | 5.7 | 0 |
| | 3.0 | 3.7 | 3.7 | 0.2 |
| | 1.5 | 2.0 | 1.8 | 0 |
| 18 | 6.0 | 4.0 | 5.7 | 0.2 |
| | 3.0 | 2.7 | 1.7 | 0 |
| | 1.5 | 2.3 | 1.8 | 0.2 |
| Tricyclazole as 75WP | 6.0 | 9.2 | 9.3 | 0 |
| | 3.0 | 5.3 | 4.3 | 0 |
| | 1.5 | 3.7 | 3.0 | 0 |
| Control | 0 | 0 | 0 | 42.0 |

Experiments 2-4

Three field tests were conducted in Taiwan in an effort to determine the efficacy of various controlled release formulations of the invention when applied to rice plants for the control of rice blast. The controlled release formulations used in these tests contained approximately four or eight percent tricyclazole by weight. The 4% tricyclazole formulation contained 46% polymer (Rhoplex AC-33) and 50% Florex 30/60 clay granules and was prepared by the general procedures outlined above. The 8% tricyclazole formulation contained 46% polymer (again Rhoplex AC-33) and 46% Florex 30/60 clay granules as the carrier. The controlled release formulations were applied to flats containing rice seedlings at either four (Table III) or two (Tables IV and V) hours prior to transplanting the seedlings to the paddy. Crop injury and disease control ratings were made as indicated in the Tables based on visual comparison to untreated control plots. For comparison, current commercial formulations were tested as well. The first of these applications was a flat application of a clay granule containing 4% tricyclazole followed by one foliar application of tricyclazole as a 75 WP at a concentration of 300 grams of active per hectare 103 days after treatment for panicle blast. The second comparative application involved a flat application of tricyclazole 75 WP followed by one foliar application of the same formulation at a concentration of 300 grams of active per hectare 103 days

after treatment for panicle blast. The final comparative application involved two foliar applications for leaf blast at 55 and 69 days after treatment at a concentration of 250 grams of active per hectare and one foliar application for panicle blast at a concentration of 300 grams of active per hectare 103 days after treatment. Those treatments marked with an asterisk represent data which is the average of nine replications while the unmarked treatments represent data which is the average of three replications. The numbers in parentheses under the control indicate the percent of leaf surface infection for the respective tests.

## Table III

| Treatment | Rate Grams of Tricyclazole/Flat | Percent Crop Injury 8 Days After Treatment | Percent Disease Control Days After Treatment 69 | Percent Disease Control Days After Treatment 84 | Yield as Percent of Control |
|---|---|---|---|---|---|
| 4% Tricyclazole Slow Release Granule | 2.0* | 0 | 25.2 | 78.8 | 100.2 |
| | 4.0* | 0 | 79.0 | 90.3 | 95.2 |
| | 6.0 | 1.0 | 67.3 | 91.0 | 94.5 |
| | 8.0 | 1.0 | 73.6 | 92.9 | 97.2 |
| 8% Tricyclazole Slow Release Granule | 2.0* | 0 | 39.4 | 82.0 | 97.8 |
| | 4.0* | 0 | 59.3 | 87.8 | 97.8 |
| | 6.0 | 0.3 | 63.5 | 91.3 | 97.2 |
| | 8.0 | 1.0 | 56.0 | 92.3 | 100.5 |
| 4% Tricyclazole Clay Granule Flat Application and One Foliar Application | 2.0 | 21.7 | 17.0 | 79.1 | 101.5 |
| Tricyclazole as 75 WP Flat Application and One Foliar Application | 2.0 | 28.3 | 37.1 | 77.5 | 101.5 |
| Three Foliar Applications of Tricyclazole as 75 WP | | 0 | 73.6 | 84.1 | 104.8 |
| Control | 0 | 0 | 0 (0.3) | 0 (4.4) | 100.0 |

## Table IV

| Treatment | Rate Grams of Tricyclazole/Flat | Percent Crop Injury 11 Days After Treatment | Percent Disease Control Days After Treatment 51 | 65 | 73 |
|---|---|---|---|---|---|
| 4% Tricyclazole Slow Release Granule | 2.0* | 0 | 98.5 | 76.8 | 58.5 |
| | 4.0* | 0 | 98.9 | 80.8 | 71.1 |
| | 6.0 | 1.0 | 98.8 | 81.6 | 73.1 |
| | 8.0 | 2.0 | 99.3 | 90.6 | 86.0 |
| 8% Tricyclazole Slow Release Granules | 2.0* | 0 | 98.1 | 73.9 | 52.6 |
| | 4.0* | 0 | 99.1 | 82.9 | 71.2 |
| | 6.0 | 1,0 | 99.3 | 89.2 | 81.6 |
| | 8.0 | 1.7 | 99.5 | 90.8 | 85.2 |
| 4% Tricyclazole Clay Granule Flat Application and One Foliar Application | 2.0 | 16.7 | 98.7 | 76.4 | 58.6 |
| Tricyclazole as 75 WP Flat Application and One Foliar Application | 2.0 | 23.3 | 91.3 | 44.6 | 38.6 |
| Three Foliar Applications of Tricyclazole as 75 WP | | 0 | 96.8 | 81.3 | 75.8 |
| Control | 0 | 0 | 0 (22.4) | 0 (65.6) | 0 |

**Table V**

| Treatment | Rate Grams of Tricyclazole/Flat | Percent Crop Injury 11 Days After Treatment | Percent Disease Control Days After Treatment 70 | 84 | Yield as Percent of Control |
|---|---|---|---|---|---|
| 4% Tricyclazole Slow Release Granule | 2.0* | 0 | 59.8 | 62.7 | 103.0 |
| | 4.0* | 0 | 78.1 | 77.2 | 104.0 |
| | 6.0 | 0.3 | 78.1 | 78.0 | 109.9 |
| | 8.0 | 3.0 | 91.6 | 92.7 | 113.9 |
| 8% Tricyclazole Slow Release Granule | 2.0* | 0 | 59.5 | 61.9 | 103.0 |
| | 4.0* | 0 | 76.8 | 76.5 | 110.0 |
| | 6.0 | 1.0 | 72.5 | 78.6 | 109.0 |
| | 8.0 | 3.7 | 91.0 | 91.3 | 104.0 |
| 4% Tricyclazole Clay Granule Flat Application and One Foliar Application | 2.0 | 20.0 | 63.9 | 44.0 | 110.9 |
| Tricyclazole as 75 WP Flat Application and One Foliar Application | 2.0 | 23.3 | 65.9 | 70.5 | 131.7 |
| Three Foliar Applications of Tricyclazole as 75 WP | | 0 | 70.1 | 73.2 | 125.7 |
| Control | 0 | 0 | 0 | 0 | 100.0 |

As is apparent from the above experiments, representative controlled release formulations of this invention effectively control rice blast with a lesser degree of injury to the plant than noted with current commercial formulations.

A study was also conducted in an effort to demonstrate the sustained release properties of the present formulation. The following procedure was used to illustrate these properties: A beaker was filled with three liters of deionized water at room temperature. The exemplary sustained release granules totaling 60 mg. of active agent were added to the water to provide a concentration of 20 ppm. when all of the tricyclazole was released from the granule. At various time intervals after addition, 1 ml. samples of water were taken from the beaker and analyzed to determine the concentration of active agent therein. For some of the formulations evaluated in this study, after the concentration of active agent in water began to stabilize, the water was removed by decanting and the residue on the bottom was allowed to dry. This residue was then analyzed to determine the concentration of active agent remaining. A 75% wettable powder formulation was also studied for comparison. The results of this study appear below in Table III as parts per million.

**Table III Sustained Release Study**

**Example No. of Formulation**

**Concentration of Tricyclazole (ppm)**

| Time After Addition (hours) | 1 | 3 | 5 | 6 | 7 | 8 | 9 |
|---|---|---|---|---|---|---|---|
| 1 | 2.3 | 1.3 | 1.5 | 1.0 | 0.9 | 0.6 | 0.7 |
| 4 | 3.6 | 2.5 | 3.7 | 1.4 | 1.9 | 0.8 | 0.8 |
| 8 | | | 4.9 | 2.9 | 3.7 | 1.1 | 2.4 |
| 24 | 4.4 | 3.2 | 9.0 | 4.6 | 4.9 | 1.4 | 6.0 |
| 48 | 6.2 | 4.9 | 11.6 | 10.6 | 10.6 | 2.0 | 8.1 |
| 72 | 6.9 | 6.1 | 13.2 | | | | |
| 96 | 7.8 | 7.2 | 14.2 | | | | |
| 120 | 8.3 | 8.0 | 14.9 | 14.5 | 13.4 | 3.4 | 16.2 |
| 144 | | | 15.6 | | | | |
| 168 | | | 16.2 | | | | |
| 192 | 9.2 | 9.9 | 16.8 | | | 5.5 | |
| 216 | 9.7 | 10.6 | 17.7 | | | 6.0 | |
| 240 | 10.1 | 11.1 | 18.2 | | | | |
| 264 | 10.4 | 11.5 | 18.4 | | | | |
| 272 | | | | | | 8.4 | |
| 288 | 10.9 | 12.0 | 18.6 | | | | |
| 301 | | | | | | 9.0 | |
| 312 | | | 18.6 | | | | |
| 325 | | | | | | 10.1 | |
| 336 | 11.6 | 13.7 | 18.1 | | | | |
| 349 | | | | | | 11.0 | |
| 373 | | | | | | 12.5 | |
| 397 | | | | | | 12.8 | |
| 421 | | | | | | 13.3 | |
| 445 | | | | | | 14.0 | |
| Residue | 8.66 | 3.8 | 1.6 | | | | |
| Total Concentration | 20.26 | 17.5 | 19.7 | | | | |

Table III (continued) Sustained Release Study

Example No. of Formulation

Concentration of Tricyclazole (ppm)

| Time After Addition (hours) | 10 | 11 | 12 | 13 | 14 | 15 | 16 | 17 | 18 | 75 WP |
|---|---|---|---|---|---|---|---|---|---|---|
| 1 | 4.2 | 4.1 | 3.5 | 2.1 | 1.5 | 2.8 | 1.4 | 1.3 | 1.7 | 18.0 |
| 4 | 8.3 | 4.7 | 4.7 | 4.6 | 1.6 | 3.4 | 1.8 | 1.3 | 2.0 | 17.8 |
| 8 | 9.4 | 6.3 | 6.1 | 5.0 | 1.9 | 3.9 | 2.3 | 1.8 | 2.3 | 17.6 |
| 24 | 15.4 | 9.5 | 11.9 | 13.3 | 4.3 | 11.0 | 7.0 | 6.2 | 8.7 | 17.7 |
| 48 | 17.3 | 17.2 | 14.7 | 15.2 | 11.1 | 15.3 | 10.8 | 11.5 | 12.6 | |
| 72 | 18.2 | 20.3 | 16.5 | 16.7 | 14.5 | 16.9 | 13.5 | 12.5 | 14.7 | |
| 96 | 18.9 | 21.1 | 17.7 | 17.6 | 18.0 | 19.6 | 14.3 | 14.5 | 16.9 | |
| 144 | 19.4 | 21.3 | 18.8 | 18.4 | 18.7 | 20.4 | 16.0 | 15.8 | 17.8 | |
| 168 | 19.6 | 21.5 | 19.3 | 18.5 | 18.8 | 21.1 | 16.6 | 17.1 | 18.0 | |
| 192 | 19.5 | 21.2 | 19.2 | 18.5 | 18.9 | 20.8 | 16.7 | 16.7 | 18.1 | |
| 216 | 19.6 | 21.5 | 19.1 | 18.7 | 19.3 | 20.9 | 16.8 | 16.5 | 18.8 | |

This study effectively demonstrates that the present controlled formulation does control the release rate of the active agent over an extended period of time, particularly when compared to the tricyclazole wettable powder formulation, wherein the active agent is released almost instantly (within one hour).

A further study was carried out on the granules of Example 19 and a 40-mesh cut from Example 20 (7.97% tricyclazole by weight). The study was carried out as described above except that only 1500 ml. of water was used, and the analyses were conducted at different times varying from 15 minutes to 72 hours. The results were as set forth in the following table.

Table IV Sustained Release Study of Examples 19 and 20. Concentration of Tricyclazole (ppm)

| Time After Addition (hours) | Example 19 | Example 20 |
|---|---|---|
| 0.25 | 2.5 | 4.3 |
| 0.50 | 2.8 | 4.8 |
| 0.75 | 3.8 | 5.2 |
| 1.00 | 4.2 | 5.6 |
| 1.50 | 5.1 | 7.3 |
| 2.00 | 5.9 | 7.7 |
| 3.00 | 7.0 | 9.1 |
| 4.00 | 7.5 | 10.1 |
| 5.00 | 8.4 | 10.8 |
| 6.00 | 8.7 | 11.4 |
| 7.00 | 9.4 | 12.7 |
| 8.00 | 9.6 | 13.4 |
| 24.00 | 14.4 | 17.2 |
| 48.00 | 14.4 | Not analyzed |
| 72.00 | 17.9 | Not analyzed |

## CLAIMS

1. A controlled-release formulation comprising tricyclazole and a polymer having a glass transition temperature of from about -20°C to 100°C and containing repeating units derived from at least one acrylic monomer of the formula (I):

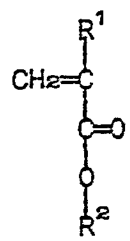

(I)

wherein:

$R^1$ is hydrogen or $C_1$-$C_4$ alkyl; and

$R^2$ is $C_1$-$C_{10}$ alkyl; said repeating units constituting from about 30% to 100% by weight of the polymer.

2. A formulation as claimed in Claim 1, wherein $R^1$ is hydrogen or methyl.

3. A formulation as claimed in Claim 1 or 2, wherein $R^2$ is $C_1$-$C_5$ alkyl.

4. A formulation as claimed in any one of claims 1 to 3 in the form of granules wherein the tricyclazole and polymer are associated with an agriculturally-acceptable carrier as an additional ingredient.

5. A granular formulation as claimed in Claim 4, wherein clay is the carrier.

6. A granular formulation as claimed in Claim 4, wherein rice hulls are the carrier.

7. A granular formulation as claimed in Claim 4, wherein limestone is the carrier.

8. A method for protecting rice against attack by rice blast which comprises applying to the locus of the rice a controlled-release formulation as claimed in any one of claims 1 to 7.

European Patent Office

**EUROPEAN SEARCH REPORT**

0120610

Application number

EP 84 30 1235

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | CHEMICAL ABSTRACTS, vol. 96, no. 3, 18th January 1982, page 114, no. 16093a, Columbus, Ohio, US; & JP - A - 81 75 496 (TAKEDA CHEMICAL INDUSTRIES LTD.) 22-06-1981 * Abstract * --- | 1,8 | A 01 N 25/12<br>A 01 N 25/10<br>A 01 N 43/90 |
| A | GB-A-2 011 788 (TAKEDA CHEM. IND.) * Page 1, lines 43-57; claims * --- | 1,4,5, 8 | |
| A | EP-A-0 064 379 (UNIROYAL) * Page 3, lines 17-23; claims 1-4,9,10,16-18 * ----- | 1-4 | |
| | | | TECHNICAL FIELDS SEARCHED (Int. Cl. 3) |
| | | | A 01 N |

The present search report has been drawn up for all claims

| Place of search | Date of completion of the search | Examiner |
|---|---|---|
| THE HAGUE | 18-06-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82